# EUROPEAN PATENT APPLICATION

(11) **EP 4 765 364 A1**
(43) Date of publication of application: **24.06.2026**
(21) Application number: 25222188.2
(22) Date of filing: 10.12.2025
(51) Int. Cl.: H01M 50/112, H01M 50/103, H01M 50/176, H01M 50/507, H01M 50/55, H01M 50/553, H01M 50/593

(54) **SECONDARY BATTERY**

(30) Priority: 18.12.2024 KR 20240189491
(71) Applicant: SAMSUNG SDI CO., LTD., Yongin-si, Gyeonggi-do 17084 (KR)
(72) Inventor: San, Hwang, 17084 Yongin-si, Gyeonggi-do (KR)
(74) Representative: Meissner Bolte Partnerschaft mbB

(57) **Abstract**

A secondary battery includes a plurality of electrode assemblies, a case including a receiving space accommodating the plurality of electrode assemblies, and a cap assembly coupled to the case. The cap assembly includes a cap plate sealing an opening of the case, a plurality of first collector plates connected to first electrodes tabs of the plurality of electrode assemblies, and a plurality of second collector plates connected to second electrode tabs of the plurality of electrode assemblies. A plurality of bus bars are arranged in a first direction in which the plurality of electrode assemblies are arranged, with one of the plurality of bus bars connecting at least two of the plurality of first collector plates and the plurality of second collector plates. A first external terminal is connected to one of the plurality of first collector plates, and a second external terminal is connected to one of the plurality of second collector plates.

## Description

### BACKGROUND

### 1. FIELD

The present invention relates to a secondary battery.

### 2. DESCRIPTION OF THE RELATED ART

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly including a positive electrode and a negative electrode, a case accommodating the same, and electrode terminals connected to the electrode assembly.

The secondary battery may be cylindrical, prismatic, or pouch-type secondary batteries depending on the shape of the case. A prismatic secondary battery has a structure in which an electrode assembly is accommodated in a prismatic metal can.

In a prismatic secondary battery, multiple cell-unit secondary batteries may be connected in series and/or in parallel and configured as a module unit that provides driving power to an external device. A bus bar that connects secondary batteries in series and/or in parallel may be welded to external terminals protruding from an upper surface of the secondary battery.

**In** order to weld the bus bar, space must be provided on the upper portion of the secondary battery. In addition, when multiple secondary batteries connected as a module are used, the effective space available for placing these batteries in an external device may be reduced due to the thicknesses of the case (or multiple cases). These requirements are disadvantageous in terms of battery capacity.

The above information disclosed in this Background section is for enhancement of understanding of the background of the present invention, and therefore, it may contain information that does not constitute related (or prior) art.

### SUMMARY

The present invention describes a secondary battery that addresses the above-described issues.

However, the technical problem to be solved by the present invention is not limited to the above problems, and other problems not mentioned herein, and aspects and features of the present invention that would address such problems, will be clearly understood by those skilled in the art from the description of the present invention below.

The invention concerns a secondary battery include a plurality of electrode assemblies each including a first electrode, a separator, a second electrode, a first electrode tab connected to the first electrode, and a second electrode tab connected to the second electrode, a case, with the plurality of electrode assemblies accommodated in a receiving space in the case, and a cap assembly coupled to the case, wherein the cap assembly includes a cap plate sealing an opening of the case, a plurality of first collector plates connected to the first electrode tabs of the plurality of electrode assemblies, a plurality of second collector plates connected to the second electrode tabs of the plurality of electrode assemblies, a plurality of bus bars arranged in a first direction in which the plurality of electrode assemblies are arranged, one of the plurality of bus bars connecting at least two of the plurality of first collector plates and the plurality of second collector plates, a first external terminal connected to one of the plurality of first collector plates, and a second external terminal connected to one of the plurality of second collector plates.

In some embodiments, the first electrode tabs and the second electrode tabs may be arranged in a second direction intersecting the first direction, the first collector plates are connected in the second direction to the first electrode tabs, and the second collector plates are connected in the second direction to the second electrode tabs.

In some embodiments, each of the plurality of first collector plates includes a vertical portion connected to the first electrode tabs and a horizontal portion connected to one of the plurality of bus bars, and each of the plurality of second collector plates includes a vertical portion connected to the second electrode tabs and a horizontal portion connected to another one of the plurality of bus bars.

In some embodiments, the cap assembly may further include lower insulators disposed between the horizontal portion of each of the plurality of first collector plates and the electrode assemblies and between the horizontal portion of each of the plurality of second collector plates and the electrode assemblies.

In some embodiments, the cap assembly may further include side insulators disposed between the first collector plates and the case and between the second collector plates and the case.

In some embodiments, the bus bars may be disposed in the first direction on a horizontal portion of each of the plurality of first collector plates or on a horizontal portion of each of the plurality of second collector plates.

In some embodiments, the cap assembly may further include a plurality of upper insulators disposed on the plurality of electrode assemblies between the bus bars and the cap plate, the upper insulators insulating the bus bar from the cap plate.

In some embodiments, each of the plurality of upper insulators may overlap a corresponding electrode assembly of the plurality of electrode assemblies in a third direction intersecting the first direction, and each of the plurality of upper insulators may be disposed on a corresponding first collector plate of the plurality of first collector plates and a corresponding second collector plate of the plurality of second collector plates.

In some embodiments, a communication hole may be formed in a surface of each of the upper insulators facing a corresponding electrode assembly of the plurality of electrode assemblies, and vent holes are formed in the cap plate at positions corresponding to the communication holes.

In some embodiments, a through-hole may be formed in each of the first collector plates, the second collector plates, the bus bars, and the cap plate, and the cap assembly may further include a plurality of rivet terminals inserted into the through-holes, each rivet terminal extending through a corresponding first collector plate of the plurality of first collector plates, a corresponding bus bar of the plurality of bus bars, and the cap plate or through a corresponding second collector plate of the plurality of second collector plates, a corresponding bus bar of the plurality of bus bars, and the cap plate, and gaskets inserted into the through-holes formed in the cap plate and insulating the cap plate from the rivet terminals.

In some embodiments, the cap assembly may further include plurality of electrolyte injection holes formed in the cap plate, with each of the plurality of electrolyte injection holes corresponding to a corresponding electrode assembly of the plurality of electrode assemblies.

In some embodiments, the case may include a partition portion partitioning the receiving space.

In some embodiments, a height of the partition portion may be the same as a difference between a height of a sidewall of the case and a thickness of the cap plate.

In some embodiments, two bus recesses may be formed in an upper portion of the partition portion, with the bus bars being arranged in the bus recesses.

In some embodiments, the secondary battery may further include gaskets disposed in the bus recesses to insulate the bus bars.

In some embodiments, the secondary battery may further include a step insulator disposed in at least one of the two bus recesses between a corresponding bus bar of the plurality of bus bars and the cap plate.

In some embodiments, the plurality of electrode assemblies may be received in the receiving space such that the first electrode tab and the second electrode tab are alternately arranged in the first direction, and each bus bar of the plurality of bus bars may be connected to the first collector plate and the second collector plate between two adjacent electrode assemblies among the plurality of electrode assemblies.

In some embodiments, the cap assembly may further include a step plate disposed on the one of the plurality of first collector plates that is connected to the first external terminal and a step plate disposed on the one of the plurality of second collector plates that is connected to the second external terminal.

In some embodiments, the case may include a partition portion partitioning the receiving space, with two bus recesses formed in an upper portion of the partition portion, and with a blocking member disposed in one of the two bus recesses.

In some embodiments, the plurality of electrode assemblies may be positioned in the receiving space in the first direction such that the first electrode tabs of the plurality of electrode assemblies may be arranged in the same direction, and the second electrode tabs of the plurality of electrode assemblies may be arranged in the same direction, and one of the plurality of bus bars may connect at least two of the plurality of first collector plates and another of the plurality of bus bars may connect at least two of the plurality of second collector plates.

According to some embodiments of the present invention, electrode assemblies may be accommodated in a single case, and the electrode assemblies may be connected in series and/or in parallel inside the secondary battery so that, as a single secondary battery, the same power can be provided as that of a module-unit secondary battery.

According to some embodiments of the present invention, by arranging a bus bar inside the secondary battery, more space may be secured in an external device to place the secondary battery, and energy density of the secondary battery may be improved. Accordingly, within the same space, the secondary battery may provide more power to the external device.

However, aspects and features of the present invention are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present invention, and further describe aspects and features of the present invention together with the detailed description of the present invention. Thus, the present invention should not be construed as being limited to the drawings.
FIG. 1 illustrates a secondary battery according to an embodiment of the present invention.
FIG. 2 illustrates a case according to an embodiment of the present invention.
FIG. 3 is an exploded view of a cap assembly according to an embodiment of the present invention.
FIG. 4 illustrates a lower surface of the cap assembly according to an embodiment of the present invention.
FIG. 5 illustrates the cap assembly, to which the electrode assemblies are coupled according to an embodiment of the present invention.
FIG. 6 illustrates a plurality of secondary batteries externally connected by a bus bar in a comparative example.
FIG. 7 illustrates the thickness of the contact portion between adjacent secondary batteries in a comparative example.
FIG. 8 illustrates the thickness of a partition portion of a case according to an embodiment of the present invention.
FIG. 9 is a cross-sectional view taken along line A-A of FIG. 1.
FIG. 10 is a cross-sectional view taken along line B-B of FIG. 1.
FIG. 11 is a cross-sectional view taken along line C-C of FIG. 1.
FIG. 12 illustrates a bus bar in a series structure arranged in a case according to an embodiment of the present invention.
FIG. 13 is a cross-sectional view taken along line D-D of FIG. 12.
FIG. 14 is an exploded view of a cap assembly according to an embodiment of the present invention.
FIG. 15 illustrates a lower surface of the cap assembly according to an embodiment of the present invention.
FIG. 16 illustrates the cap assembly to which the plurality of electrode assemblies are coupled according to an embodiment of the present invention.
FIG. 17 illustrates a bus bar arranged in a case according to an embodiment of the present invention.
FIG. 18 is a cross-sectional view taken along line E-E of FIG. 17.
FIG. 19 illustrates the lower surface of a cap assembly having a series-parallel structure according to an embodiment of the present invention.

### DETAILED DESCRIPTION

Hereinafter, embodiments of the present invention will be described, in detail, with reference to the accompanying drawings. The terms or words used in the present specification and claims are not to be limitedly interpreted as general or dictionary meanings and should be interpreted as meanings and concepts that are consistent with the technical idea of the present invention on the basis of the principle that an inventor can be his/her own lexicographer to appropriately define concepts of terms to describe his/her invention in the best way.

The embodiments described in this specification and the configurations shown in the drawings are only some of the embodiments of the present invention and do not represent all of the technical spirit, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms "first", "second", "third", etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the components may be directly "linked," "coupled" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

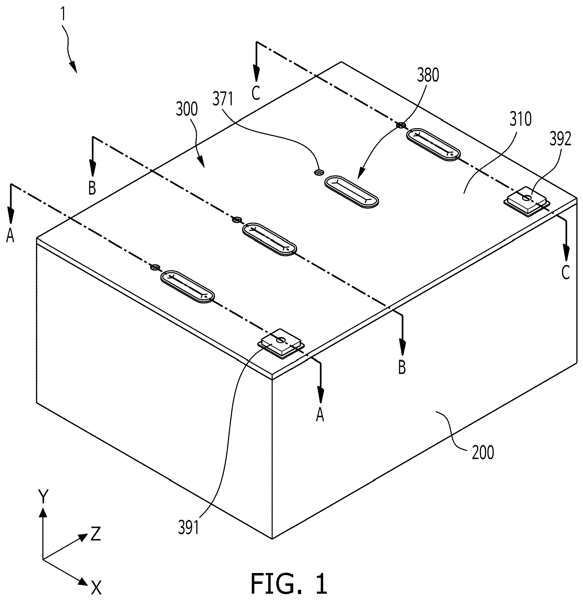

FIGS. 1 to 19 illustrate batteries that include four electrode assemblies. But the present invention is not limited with respect to the number of electrode assemblies.

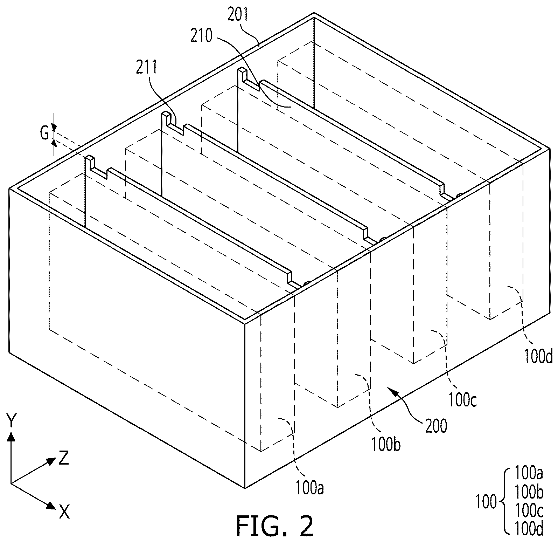

FIG. 1 illustrates a secondary battery according to an embodiment of the present invention. FIG. 2 illustrates a case according to an embodiment of the present invention.

Referring to FIGS. 1 and 2, a secondary battery 1 according to an embodiment of the present invention includes a plurality of electrode assemblies 100. The electrode assemblies 100 are accommodated in a case 200, and a cap assembly 300 is coupled to the case 200 to close an open side of the case 200.

According to an embodiment, each electrode assembly 100 may include a first electrode, a separator, a second electrode, a first electrode tab connected to the first electrode, and a second electrode tab connected to the second electrode. The electrode assembly 100 may be formed by winding or stacking a thin plate- or film-shaped laminate composed of the first electrode, separator, and second electrode. But the present invention is not limited with respect to the shape of the electrode assembly 100.

According to an embodiment, each of the plurality of electrode assemblies 100 may be accommodated in respective receiving space formed in a single case 200. For example, the plurality of electrode assemblies 100 may be received in the interior of the case 200 so that the largest-area back surfaces and front surfaces of the electrode assemblies 100 face each other.

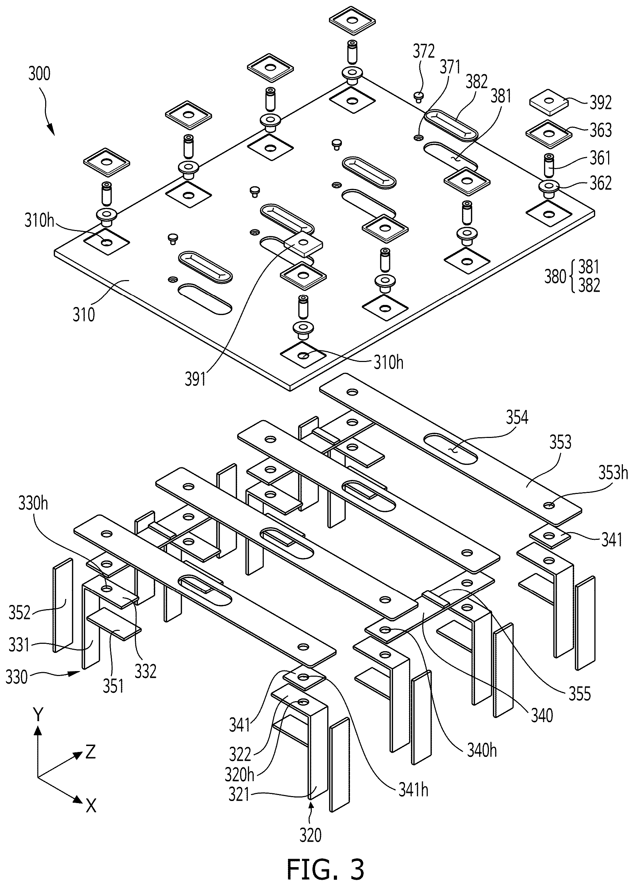

A first electrode of each of the electrode assemblies 100 may be an anode and a second electrode of each of the electrode assemblies 100 may be a cathode (the opposite arrangement is also possible). Each of the first electrodes may be formed by coating a first electrode active material, such as a transition metal oxide, on a first electrode current collector formed of, for example, aluminum or an aluminum alloy metal foil. The first electrodes may include a first electrode tab (e.g., first uncoated portion) where the first electrode active material is not provided. The first electrode tab provides a current flow path between the first electrode and a first collector plate 320 (see FIG. 3). When manufacturing the first electrode, the first electrode tab may be formed by cutting a portion that protrudes from a first side of the electrode assembly structure, or the first electrode tab may be made to protrude farther beyond the separator without cutting.

Each of the second electrodes may be formed by coating a second electrode active material, such as graphite or carbon, on a second electrode current collector formed of, for example, copper, copper alloy, nickel, or a nickel alloy metal foil. The second electrodes may include a second electrode tab (e.g., second uncoated portion) as an area not coated with the second electrode active material. The second electrode tab may provide a current flow path between the second electrode and a second collector plate 330 (see FIG. 3). When manufacturing the second electrode, the second electrode tab may be formed by cutting a portion that protrudes from a second side of the electrode assembly structure, or the second electrode tab may be made to protrude farther beyond the separator without cutting.

According to an embodiment, the first electrode tab may be located on one side (e.g., a right side) in the X-axis direction of the electrode assembly 100, and the second electrode tab may be located on the other side (e.g., a left side) in the X-axis direction of the electrode assembly 100. Here, the right side and left side are based on the orientation of the secondary battery 1 shown in FIGS. 1 and 2. But the positions may change if the secondary battery 1 is rotated left-right or up-down.

According to an embodiment, the case 200 may have an open side and may accommodate the plurality of electrode assemblies 100. A cap assembly 300 may be coupled to the case 200 to close the open side.

The case 200 may form the external appearance of the secondary battery 1. As one example, the case 200 may be a prismatic structure. In one embodiment, the case 200 may be formed of stainless steel (SUS). In other embodiments, the case 200 may be formed of a conductive metal such as aluminum, an aluminum alloy, or steel plated with nickel. But the present invention is not limited to these examples.

The case 200 may include partition portions 210 that divides the case 200 into a plurality of receiving spaces. The partition portions 210 may be parallel to a side surface of the case 200 with a predetermined gap from the side surface to thereby form a plurality of receiving spaces. In one example, the partition portions 210 may be formed of multiple plates that extend at predetermined gaps from a side surface of the case 200 in the Z-axis direction.

The heights of the partition portions 210 may correspond to (e.g., be the same as) the difference between the height of a sidewall 201 of the case 200 and the thickness of a cap plate 310. For example, the upper surface of the partition portions 210 may be lower than the height of the sidewall 201 of the case 200 by an amount that corresponds to the thickness of the cap plate 310. The upper surfaces of the partition portions 210 may be lower than the upper surface of the sidewall 201 of the case 200, thereby creating a step G. The cap plate 310 may be placed on top of the partition portions 210. While it is possible for the cap plate 310 to be joined by metal bonding (e.g., welding (such as brazing or soldering), etc.) in a stepped engagement with the partition portions 210 and the sidewall 201 of the case 200, the present invention is not limited in this regard.

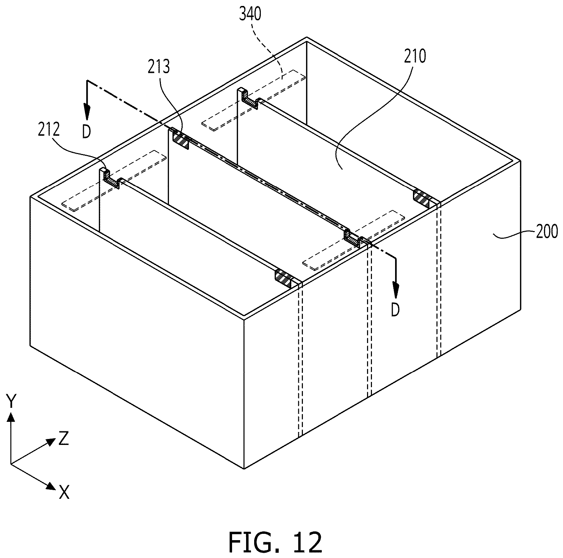

Bus recesses 211 may be formed in upper surfaces (or upper portions) of the partition portions 210. As will be described below, a bus bar 340 (see FIG. 12) is disposed in the bus recesses 211 in a first direction (e.g., the Z-axis direction) in which the plurality of electrode assemblies 100 are arranged such that the bus bar 340 crosses the partition portions 210.

The cap assembly 300 may be coupled to the case 200. In particular, the cap assembly 300 may include a cap plate 310 coupled to the case 200. A more detailed description of the cap assembly 300 will be given below with reference to FIGS. 3 to 5.

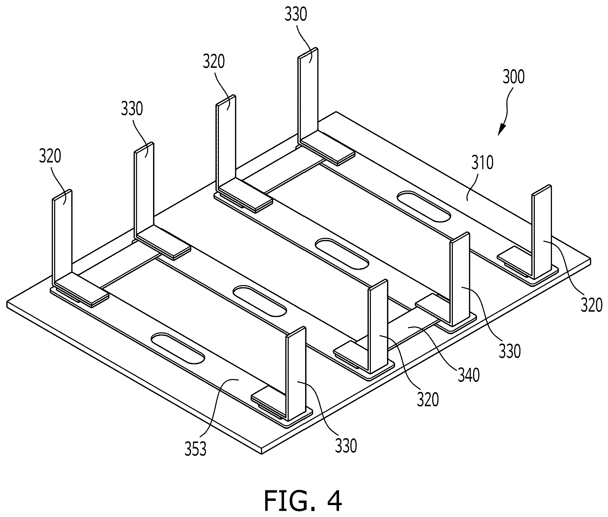

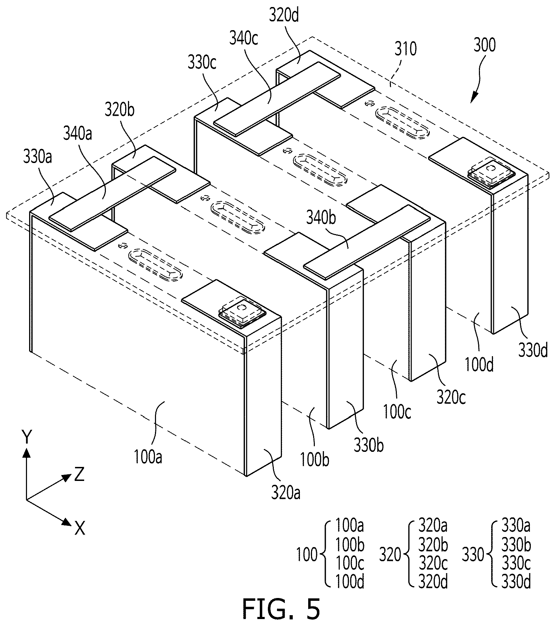

FIG. 3 is an exploded view of a cap assembly according to an embodiment of the present invention. FIG. 4 illustrates a lower surface of the cap assembly according to an embodiment of the present invention. FIG. 5 illustrates the cap assembly to which the plurality of electrode assemblies are coupled, according to an embodiment of the present invention. Hereinafter, with a detailed description of the specific configuration of the cap assembly 300, the structure for connecting the plurality of electrode assemblies 100 in series will be explained.

Referring to FIGS. 3 to 5, the cap assembly 300 includes a cap plate 310, a first collector plate 320, a second collector plate 330, a bus bar 340, a first external terminal 391, and a second external terminal 392.

The cap plate 310 may be coupled to the case 200 and the cap plate 310 may be made of the same metal material as the case 200, but the present invention is not limited in this regard. For example, the cap plate 310 may be placed on top of the partition portion 210 of the case 200 and welded along the periphery to the sidewall of the case 200. In some embodiments, the cap plate 310 may seal an opening of the case 200.

Vent holes 381 and electrolyte injection holes 371 may be formed in the cap plate 310 at positions corresponding to the electrode assemblies 100. The cap plate 310 may be coupled, via rivet terminals 361, to the first collector plate 320, the second collector plate 330, and the bus bar 340. A first external terminal 391 and a second external terminal 392 may be disposed on the cap plate 310 with cap plate insulators 363 interposed between the terminals 391 and 392 and the cap plate 310. The first external terminal 391 may be electrically connected to the first collector plate 320 via a rivet terminal 361. The second external terminal 392 may be electrically connected to the second collector plate 330 via a rivet terminal 361.

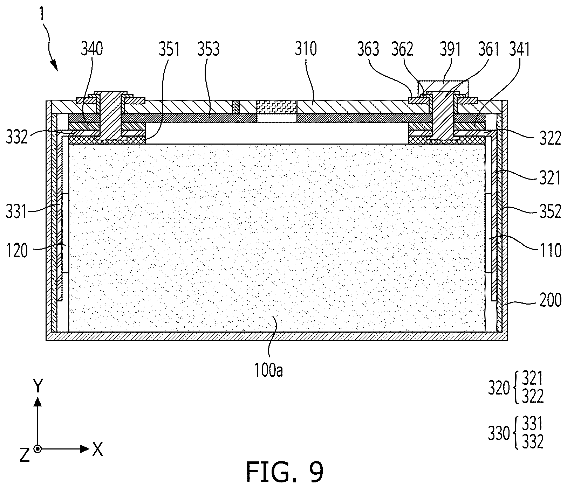

Each of the first collector plates 320 is connected to a first electrode tab 110 (see FIG. 9) of one of the electrode assemblies 100. Each of the second collector plates 330 is connected to a second electrode tab 120 (see FIG. 9) of one of the plurality of electrode assemblies 100.

The first electrode tab 110 and the second electrode tab 120 may be arranged in a second direction (e.g., the X-axis direction) intersecting the first direction (e.g., the Z-axis direction) in which the plurality of electrode assemblies 100 are arranged. The first collector plates 320 and the second collector plates 330 may be connected in that second direction to the first electrode tab 110 and the second electrode tab 120 respectively. The plurality of electrode assemblies 100 may be arranged in the first direction and received in the case 200. Based on the second direction intersecting the first direction, each electrode assembly 100 may have the first electrode tab 110 protruding and extending from a first side and the second electrode tab 120 protruding and extending from a second side. The first collector plate 320 and the second collector plate 330 may be connected at the two opposite sides of each electrode assembly 100 to the first electrode tab 110 and the second electrode tab 120, respectively.

Each of the plurality of first collector plates 320 may include a vertical portion 321 connected to the first electrode tab 110 and a horizontal portion 322 connected to the bus bar 340. For example, the vertical portion 321 may be welded to the first electrode tab 110, and the horizontal portion 322 may be fastened to the bus bar 340 by a rivet terminal 361.

Each of the second collector plates 330 may include a vertical portion 331 connected to the second electrode tab 120 and a horizontal portion 332 connected to the bus bar 340. The vertical portion 331 may be welded to the second electrode tab 120, and the horizontal portion 332 may be fastened to the bus bar 340 by a rivet terminal 361.

The cap assembly 300 may further include lower insulators 351, which may be made of an insulating material. A lower insulator 351 may be disposed between the horizontal portion 322 of each of the first collector plates 320 and the electrode assemblies 100. A lower insulator 351 may be disposed between the horizontal portion 332 of each of the second collector plates 330 and the electrode assemblies 100. The lower insulators 351 may prevent a short circuit between the horizontal portion 322 of the first collector plate 320 and the second electrode of the electrode assembly 100, or between the horizontal portion 332 of the second collector plate 330 and the first electrode of the electrode assembly 100.

The cap assembly 300 may further include side insulators 352. The side insulators 352 may be made of an insulating material. The side insulators 352 may be disposed between the first collector plates 320 and the case 200, and between second collector plates 330 and the case 200. To prevent the case 200 from having polarity, the side insulator 352 may insulate between the vertical portion 321 of the first collector plate 320 and the case 200 and between the vertical portion 331 of the second collector plate 330 and the case 200.

In the first direction (for example, along the Z-axis direction) in which the plurality of electrode assemblies 100 are arranged, the bus bar 340 may connect at least two of first collector plates 320 or at least two of second collector plates 330. The bus bar 340 may be disposed along the first direction on top of the horizontal portion 322 of each of the plurality of first collector plates 320 or the horizontal portion 332 of each of the plurality of second collector plates 330.

The electrode assemblies 100 may be accommodated in the receiving space of the case 200 such that the first electrode tab 110 and the second electrode tab 120 are alternately arranged in the first direction (for example, the Z-axis direction). The bus bars 340 may connect each of the first collector plates 320 and each of the second collector plates 330, that is, between two adjacent electrode assemblies 100 (for example, between a first electrode assembly 100a and a second electrode assembly 100b).

As shown in FIG. 5, the first through fourth electrode assemblies 100a, 100b, 100c, 100d may be received in the case 200 along the Z-axis direction such that the first electrode tabs 110 and the second electrode tabs 120 alternate. In this arrangement, the first electrode tab 110 of the first electrode assembly 100a, the second electrode tab 120 of the second electrode assembly 100b, the first electrode tab 110 of the third electrode assembly 100c, and the second electrode tab 120 of the fourth electrode assembly 100d may be arranged in the same direction (e.g., to the right). Further, the second electrode tab 120 of the first electrode assembly 100a, the first electrode tab 110 of the second electrode assembly 100b, the second electrode tab 120 of the third electrode assembly 100c, and the first electrode tab 110 of the fourth electrode assembly 100d may be arranged in the same direction (e.g., to the left).

A first bus bar 340a may connect a second collector plate 330a connected to the second electrode tab 120 of the first electrode assembly 100a to a first collector plate 320b connected to the first electrode tab 110 of the second electrode assembly 100b. A second bus bar 340b may connect a second collector plate 330b connected to the second electrode tab 120 of the second electrode assembly 100b to a first collector plate 320c connected to the first electrode tab 110 of the third electrode assembly 100c. A third bus bar 340c may connect a second collector plate 330c connected to the second electrode tab 120 of the third electrode assembly 100c to a first collector plate 320d connected to the first electrode tab 110 of the fourth electrode assembly 100d.

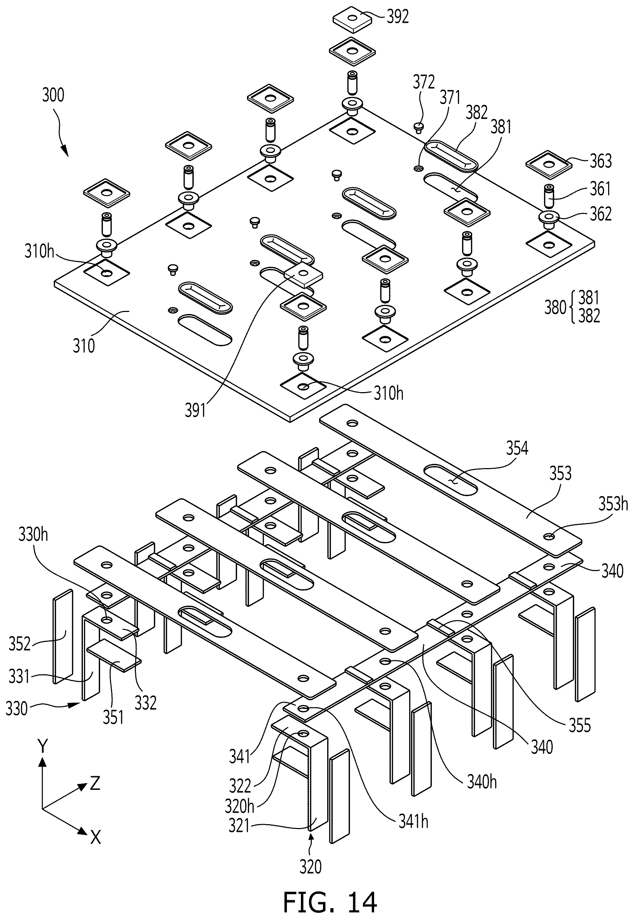

With the arrangement depicted in FIG. 5, the first through fourth electrode assemblies 100a, 100b, 100c, 100d are connected in series. But the present invention is not limited to series connection; a structure for parallel connection of electrode assembly will be described below with reference to FIGS. 14 to 18.

According to an embodiment, the cap assembly 300 may further include a step plate 341. The step plate 341 may be disposed on a first collector plate 320 connected to the first external terminal 391 among the plurality of first collector plates 320. Another step plate 341 may be disposed on a second collector plate 330 connected to the second external terminal 392 among the plurality of second collector plates 330. In the series connection arrangement, the bus bar 340 may be disposed on top of a second collector plate 330 connected to the first electrode assembly 100a, while a first collector plate 320 connected to the first electrode assembly 100a may not have the bus bar 340, which can result in a difference in heights (i.e., a step). To eliminate this step difference and place an upper insulator 353, the step plate 341 may be disposed on the first collector plate 320 on which the bus bar 340 is not placed. The first collector plate 320 on which the step plate 341 is disposed may be electrically connected to the first external terminal 391 via a rivet terminal 361.

According to an embodiment, the cap assembly 300 may further include a plurality of upper insulators 353. The upper insulators 353 may be disposed on the electrode assemblies 100, between the bus bar 340 and the cap plate 310, and may insulate the bus bar 340 from the cap plate 310.

Each of the upper insulators 353 may be disposed to overlap one of the electrode assemblies 100 in a third direction (e.g., the Y-axis direction) that intersects the first direction (e.g., the Z-axis direction), and an upper insulator 353 may be arranged on each of the plurality of first collector plates 320 and on each of the plurality of second collector plates 330. In particular, each of the plurality of upper insulators 353 may be placed in each of the plurality of receiving spaces formed in the case 200.

Each of the plurality of upper insulators 353 may include a communication hole 354 formed in the surface facing each of the plurality of electrode assemblies 100. The cap plate 310 may include a vent hole 381 corresponding to the communication hole 354. In each space receiving one of the electrode assemblies 100 inside the case 200, the internal pressure and temperature may differ. A high-temperature gas generated in each space may be pass through the communication hole 354 of the corresponding upper insulator 353 to move to a vent plate 382 placed over the vent hole 381.

Electrolyte injection holes 371 may be formed in the cap plate 310, with each of the electrolyte injection holes 371 corresponding to one of the electrode assemblies 100. For example, the electrolyte injection holes 371 may be formed in the cap plate 310 to correspond to the electrode assemblies 100 housed in the case 200. The electrolyte may be injected into the case 200 through the electrolyte injection holes 371. In FIGS. 3 and 5, the electrolyte injection holes 371 are shown as being formed in the cap plate 310, but the present invention is not limited thereto. After the electrolyte injection is completed, the electrolyte injection hole 371 may be sealed using a sealing means such as a stopper 372.

The vent portion 380 may be formed in the cap plate 310. The vent portion 380 may include vent holes 381 and vent plates 382. Each of the vent holes 381 may be formed in the cap plate 310 to correspond to one of the electrode assemblies 100. For example, depending on the number of the plurality of electrode assemblies 100 and the positions of the electrode assemblies 100 housed in the case 200, the vent holes 381 may be formed in the cap plate 310. In another example, the vent holes 381 may be formed in the cap plate 310 spaced apart from the electrolyte injection holes 371. The vent plates 382 may be disposed on the vent holes 381. The vent plates 382 may open if the internal pressure of the secondary battery 1 exceeds a predetermined pressure. The vent portion 380 may prevent the secondary battery 1 from exploding or prevent a chain thermal reaction in the adjacent secondary battery 1 when multiple secondary batteries 1 are arranged closely together. For example, the vent portion 380 may be configured to open if the internal pressure of the secondary battery 1 exceeds a predetermined critical pressure. The critical pressure may be set differently according to the application field, material, or purpose of the secondary battery 1. In another example, the vent portion 380 may be configured to open if the internal temperature exceeds a predetermined critical temperature.

Through-holes 310h, 320h, 330h may be formed in the cap plate 310, each of the first collector plates 320, and each of the second collector plates 330. The cap assembly 300 may further include rivet terminals 361 that is inserted into each of the through-holes 310h, 320h, 330h, and first gaskets 362 that are inserted into the through-holes 310h of the cap plate 310.

Rivet terminals 361 may pass through the through-holes 320h, 340h, 310h formed in each of the plurality of first collector plates 320, the bus bars 340, and the cap plate 310 to thereby fasten the first collector plates 320, the bus bar 340, and the cap plate 310. Further, rivet terminals 361 may pass through the through-holes 330h, 340h, 310h formed in each of the plurality of second collector plates 330, the bus bars340, and the cap plate 310 to thereby fasten the second collector plates 330, the bus bars 340, and the cap plate 310. The first gaskets 362 are interposed between the through-holes 310h of the cap plate 310 and the rivet terminals 361 to thereby insulate between the cap plate 310 and the rivet terminal 361.

The cap assembly 300 may further include cap plate insulators 363. The cap plate insulators 363 may be disposed around a portion of the upper surface of the cap plate 310 in which the through-holes 310h are formed. The cap plate insulator 363 may prevent the rivet terminals 361 from contacting the upper surface of the cap plate 310 when the rivet terminals 361 are fastened to the cap plate 310. In another example, the cap plate insulators 363 may prevent contact between the upper surface of the cap plate 310 and the first external terminals 391 or the second external terminals 392 when the first external terminals 391 or the second external terminals 392 are fastened to the rivet terminals 361.

The first external terminal 391 may be connected to any one of the first collector plates 320 via the rivet terminal 361. In particular, the first external terminal 391 may be connected to the first collector plate 320 to have the same electrical polarity as the first electrode.

The second external terminal 392 may be connected to any one of the second collector plates 330 via the rivet terminal 361. In particular, the second external terminal 392 may be connected to the second collector plate 330 to have the same electrical polarity as the second electrode.

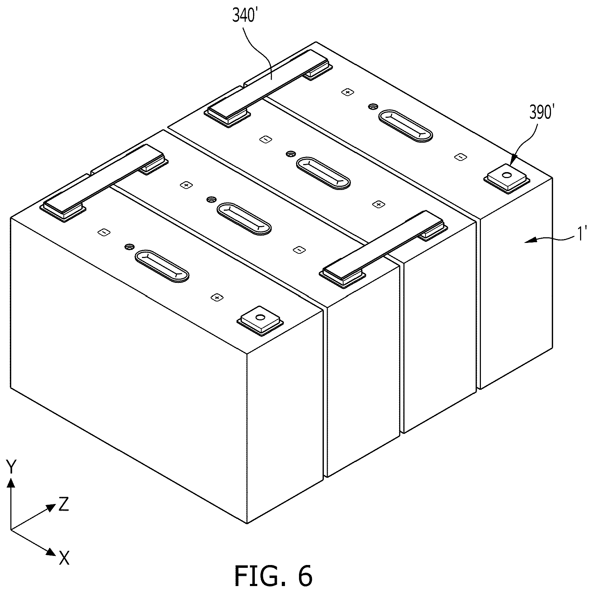

FIG. 6 illustrates a plurality of secondary batteries externally connected by a bus bar in a comparative example. Referring to FIG. 6, a plurality of cell-unit secondary batteries 1' are connected to one another by bus bars 340'. In this arrangement, welding space is needed to connect the secondary batteries 1' by the external bus bars 340', and multiple external terminals 390' protrude from the upper surface of each secondary battery 1'. One the other hand, referring to FIG. 1, a secondary battery 1 according to embodiments of the present invention can electrically connect the electrode assemblies 100 internally via a bus bar 340 (see FIG. 5). As such, only two external terminals 391, 392 protrude from the upper surface of the secondary battery 1. And, as such, a larger space may be used to house the secondary battery 1.

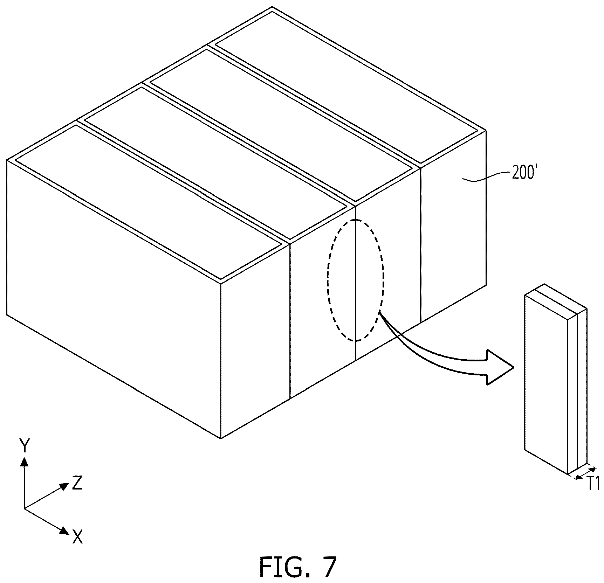

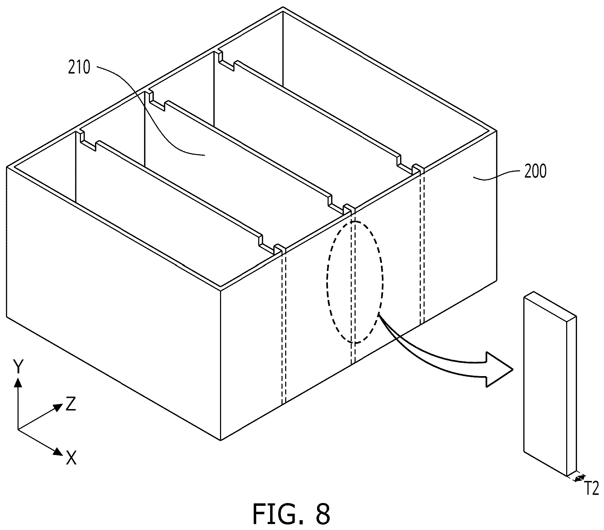

FIG. 7 illustrates the thickness of the contact portion between adjacent secondary batteries in a comparative example. FIG. 8 illustrates the thickness of a partition portion of a case according to an embodiment of the present invention.

Referring to FIGS. 6 and 7, in a comparative example, electrode assemblies are received in multiple cases 200' of the secondary batteries 1'. The secondary batteries 1' may be placed in contact and connected. Two sidewall portions of two cases 200' may be located between the electrode assemblies housed in the two cases 200'. The two sidewall portions may result in a thickness T1.

Referring to FIG. 8, according to an embodiment of the present invention, the case 200 includes a partition portion 210 that divides the case 200 into multiple receiving spaces. Electrode assemblies may be received in the receiving spaces created by the partition portion 210. The thickness of the single partition portion may be T2, which is less than the thickness T1 of the two sidewall portions shown in FIG. 7. Thus, the arrangement of the present invention enables a larger number of electrode assemblies to be housed in the same space.

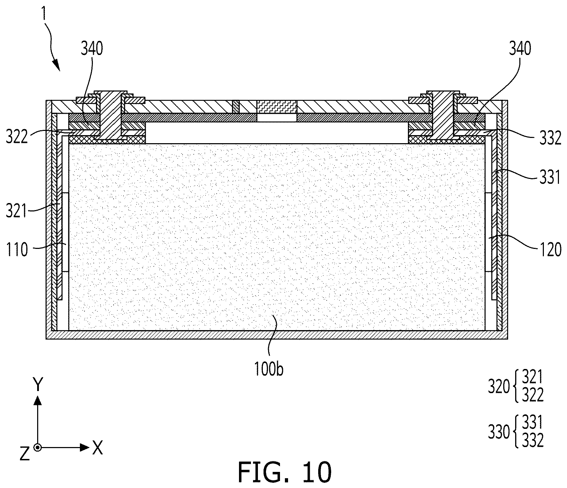

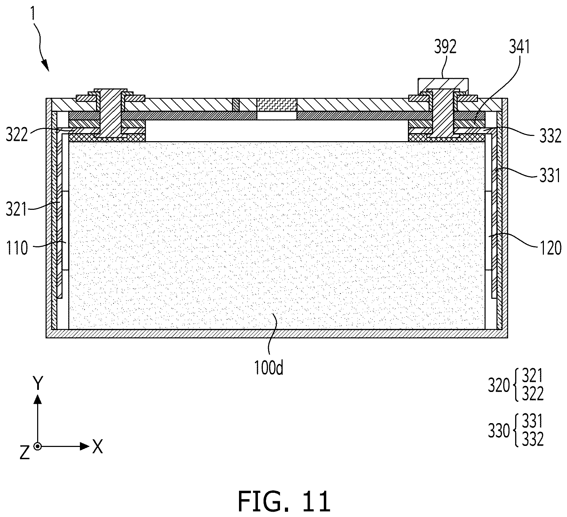

FIG. 9 is a cross-sectional view taken along line A-A of FIG. 1. FIG. 10 is a cross-sectional view taken along line B-B of FIG. 1. FIG. 11 is a cross-sectional view taken along line C-C of FIG. 1.

Referring to FIGS. 1, 5, and 9, a first electrode assembly 100a according to an embodiment of the present invention may be received in the case 200 so that a first electrode tab 110 protrudes from a first side in the X-axis direction, and a second electrode tab 120 protrudes from a second side in the X-axis direction. The vertical portion 321 of the first collector plate 320 may be connected to the first electrode tab 110, and the vertical portion 331 of the second collector plate 330 may be connected to the second electrode tab 120. The side insulators 352 may be disposed between the first collector plate 320 and the case 200 and between the second collector plate 330 and the case 200. The lower insulators 351 may be disposed between the horizontal portion 322 of the first collector plate 320 and the first electrode assembly 100a and between the horizontal portion 332 of the second collector plate 330 and the first electrode assembly 100a. A bus bar 340 may be disposed on the second collector plate 330 along a first direction (e.g., the Z-axis direction) in which the plurality of electrode assemblies 100 are arranged. The bus bar 340 may be connected to a first collector plate 320 that is connected to an adjacent second electrode assembly 100b. A step plate 341 may be disposed on the first collector plate 320. An upper insulator 353 may be disposed above the bus bar 340 and the step plate 341. The cap plate 310 may be disposed above the upper insulator 353.

Rivet terminals 361 may be inserted into through-holes formed in the first collector plate 320, the step plate 341, and the cap plate 310 to thereby fasten the structures together. The rivet terminals 361 may be inserted into through-holes formed in the second collector plate 330, the bus bar 340, and the cap plate 310 to thereby fasten the structures together. The first gaskets 362 may be inserted into the through-holes of the cap plate 310 to insulate the rivet terminal 361 from the cap plate 310.

Cap plate insulators 363 may be disposed on the upper surface of the cap plate 310 where the through-holes 310h are formed (see FIG. 3). The cap plate insulator 363 may insulate the upper surface of the cap plate 310 from the rivet terminals 361.

The first external terminal 391 may be connected to the first collector plate 320 via the rivet terminal 361. In this configuration, the first external terminal 391 has the same electrical polarity as the first electrode.

Referring to FIGS. 1, 5, and 10, a second electrode assembly 100b may be received in the case 200 in the opposite direction compared to the direction in which the first electrode tab 110 and the second electrode tab 120 of the first electrode assembly 100a protrude. For example, the second electrode assembly 100b may be received so that the second electrode tab 120 protrudes from a first side in the X-axis direction, and the first electrode tab 110 protrudes from a second side in the X-axis direction.

The first collector plate 320 may be connected to the first electrode tab 110. The second collector plate 330 may be connected to the second electrode tab 120. A bus bar 340 disposed along the Z-axis direction may be placed on the first collector plate 320 that is connected to the second electrode assembly 100b. The first collector plate 320 connected to the second electrode assembly 100b may be connected, via the bus bar 340, to the second collector plate 330 connected to the first electrode assembly 100a.

A bus bar 340 disposed along the Z-axis direction may be placed on the second collector plate 330 connected to the second electrode assembly 100b. The second collector plate 330 connected to the second electrode assembly 100b may be connected, via the bus bar 340, to the first collector plate 320 connected to the third electrode assembly 100c.

Upper insulators 353 may be placed on the bus bar 340 that is connected to the first collector plate 320 and on the bus bar 340 that is connected to the second collector plate 330.

Still referring to FIGS. 1, 5, and 11, a fourth electrode assembly 100d may be received in the case 200 in the opposite direction compared to the direction in which the first electrode tab 110 and the second electrode tab 120 of the third electrode assembly 100c protrude.

A bus bar 340 disposed along the Z-axis direction may be placed on the first collector plate 320 connected to the fourth electrode assembly 100d. The first collector plate 320 connected to the fourth electrode assembly 100d may be connected, via the bus bar 340, to the second collector plate 330 connected to the third electrode assembly 100c. A step plate 341 may be placed on the second collector plate 330 connected to the fourth electrode assembly 100d.

The rivet terminals 361 may be inserted into through-holes formed in the second collector plate 330, the step plate 341, and the cap plate 310 to thereby fasten the structures together. Similarly, the rivet terminals 361 may be inserted into through-holes formed in the first collector plate 320, the bus bar 340, and the cap plate 310, thereby fastening the structures together. The first gaskets 362 may be inserted into the through-holes of the cap plate 310 to insulate the rivet terminal s361 from the cap plate 310.

The second external terminal 392 may be connected to the second collector plate 330 via the rivet terminal 361 so that the second external terminal 392 has the same electrical polarity as the second electrode.

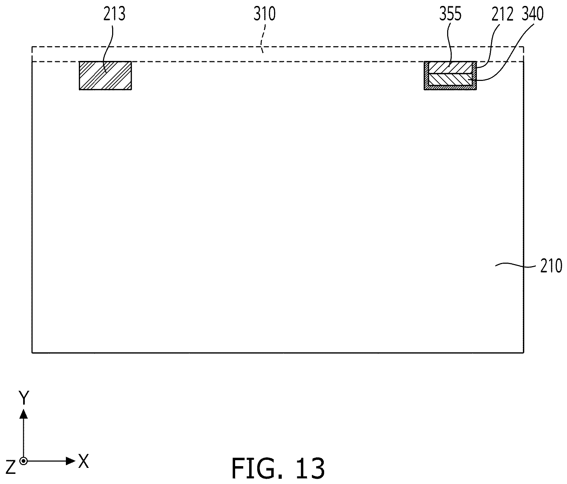

FIG. 12 illustrates a bus bar in a series structure arranged in a case according to an embodiment of the present invention. FIG. 13 is a cross-sectional view taken along line D-D of FIG. 12.

Referring to FIGS. 12 and 13, the bus bar 340 is disposed in the bus recess 211 formed in the partition portion 210 of the case 200. In one embodiment, two bus recesses 211 may be formed in the partition portion 210 so that the bus bars 340 are disposed along the direction (e.g., the Z-axis direction) in which the electrode assemblies are received in the case 200. A second gasket 212 may be disposed in the bus recess 211 to insulate the bus bar 340, e.g., to insulate the bus bar 340 from the case 200.

A blocking member 213 may be placed in one of the two bus recesses 211 formed in a partition portion 210. For example, the blocking member 213 may be placed in the bus recess 211 in which the bus bar 340 is not placed. The blocking member 213 may prevent an exchange of electrolyte or the like between adjacent receiving spaces.

A step insulator 355 may be placed between the bus bar 340 and the cap plate 310 in the bus recess 211. For example, the cap plate 310 may rest on the upper surface of the partition portion 210, and if the thickness of the bus bar 340 is less than the depth of the bus recess 211, a gap may form above the bus bar 340. The step insulator 355 may eliminate this gap and insulate between the bus bar 340 and the cap plate 310.

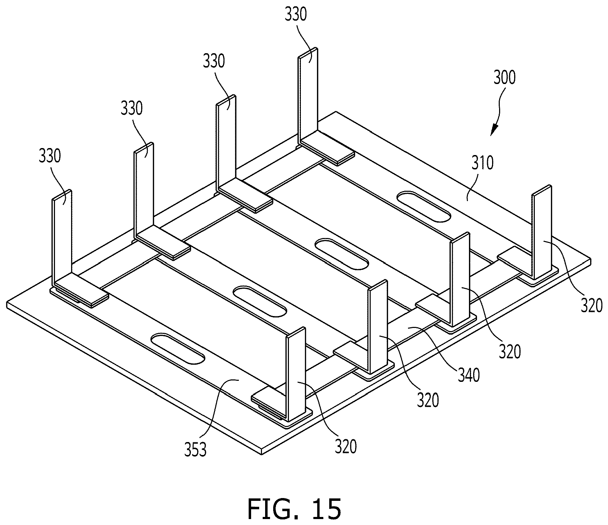

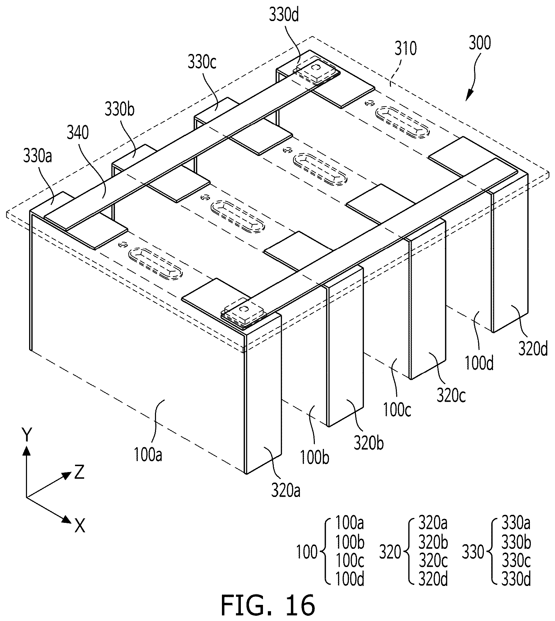

FIG. 14 is an exploded view of a cap assembly according to an embodiment of the present invention. FIG. 15 illustrates a lower surface of the cap assembly according to an embodiment of the present invention. FIG. 16 illustrates the cap assembly, to which the electrode assemblies are coupled, according to an embodiment of the present invention. Since the specific configuration of the cap assembly 300 is substantially the same as that described in detail above with reference to FIGS. 3 to 5, repeated descriptions will be omitted, and the invention below will focus on a structure in which a plurality of electrode assemblies 100 are connected in parallel.

Referring to FIGS. 14 to 16, the electrode assemblies 100 are received in the receiving spaces of the case 200 in a first direction (e.g., the Z-axis direction) so that the first electrode tabs 110 are arranged in the same direction and the second electrode tabs 120 are arranged in the same direction. For example, based on the X-axis, in each of the first to fourth electrode assemblies 100a, 100b, 100c, 100d, the first electrode tabs 110 may protrude from a first side (e.g., right side), and the second electrode tabs 120 may protrude from a second side (e.g., left side).

Each of first collector plates 320a, 320b, 320c, 320d may be connected, on the first side, in the same direction to the first electrode tab 110 of each of the first to fourth electrode assemblies 100a, 100b, 100c, 100d. Each of second collector plates 330a, 330b, 330c, 330d may be connected, on the second side, in the same direction to the second electrode tab 120 of each of the first to fourth electrode assemblies 100a, 100b, 100c, 100d.

The bus bars 340 may be connected to the first collector plates 320a, 320b, 320c, 320d and to the second collector plates 330a, 330b, 330c, 330d. By this arrangement, the plurality of electrode assemblies 100 can be connected in parallel.

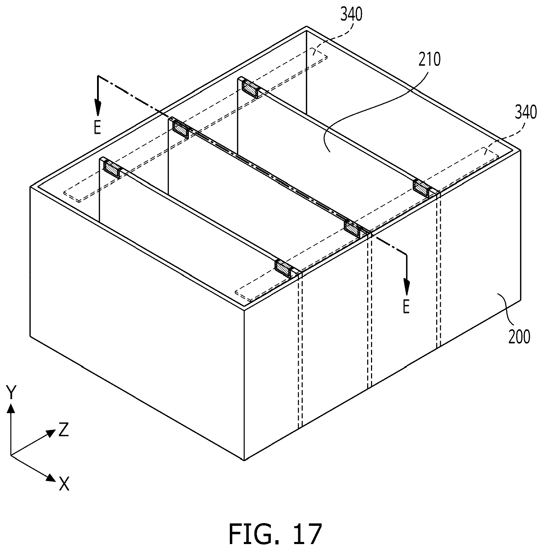

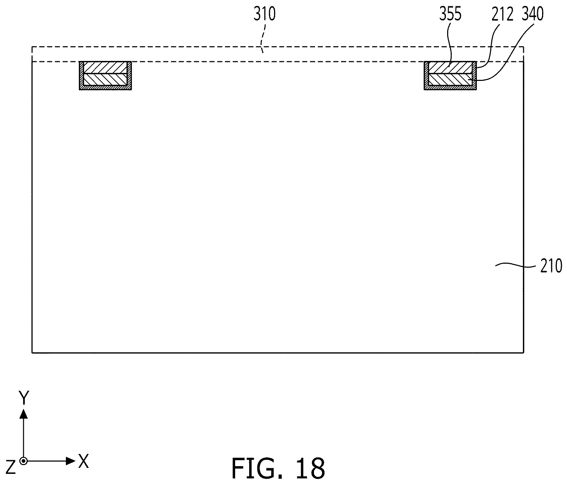

FIG. 17 illustrates bus bars arranged in a case according to an embodiment of the present invention. FIG. 18 is a cross-sectional view taken along line E-E of FIG. 17.

Referring to FIGS. 17 and 18, the bus bars 340 are disposed in the bus recesses 211 formed in the partition portions 210 of the case 200. In one embodiment, two bus recesses 211 may be formed in the partition portions 210 so that the bus bars 340 are arranged in the direction (e.g., the Z-axis direction) in which the plurality of electrode assemblies are arranged in the case 200. Second gaskets 212 may be disposed in the bus recesses 211 to insulate the bus bars 340 from the case 200.

A step insulator 355 may be arranged between the bus bars 340 and the cap plate 310 in the bus recesses 211. The step insulators 355 may eliminate the gaps and insulate between the bus bars 340 and the cap plate 310.

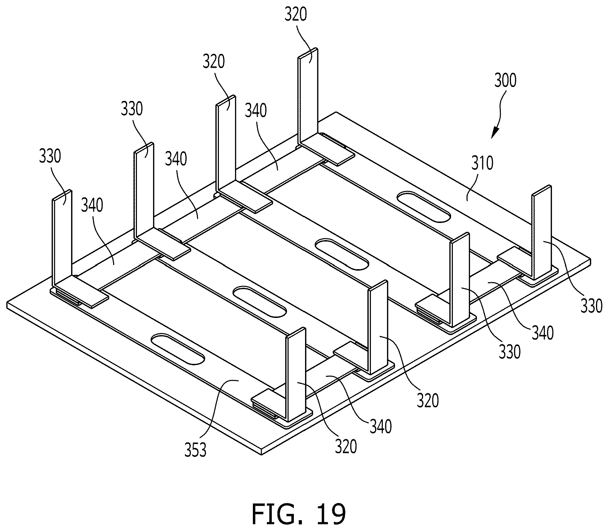

FIG. 19 illustrates the lower surface of a cap assembly having a series-parallel structure according to an embodiment of the present invention. Since the specific configuration of the cap assembly 300 is substantially the same as that described above with reference to FIGS. 3 to 5, the following will focus on a structure in which a plurality of electrode assemblies 100 (see FIG. 5) are connected in parallel and in series.

Referring to FIG. 19, the cap assembly 300 may connect the plurality of electrode assemblies 100 (see FIG. 5) in parallel and in series via the bus bar 340. Among the first to fourth electrode assemblies 100a, 100b, 100c, 100d (see FIG. 5), the first electrode assembly 100a and the second electrode assembly 100b may be arranged so that their electrode tabs face in the same direction, thereby being connected in parallel. The third electrode assembly 100c and the fourth electrode assembly 100d may be arranged so that their electrode tabs face in the same direction, thereby being connected in parallel. The electrode tab directions of the second electrode assembly 100b and the third electrode assembly 100c may be arranged in opposite directions to connect the second electrode assembly 100b and the third electrode assembly 100c in series. Within a single case 200, the electrode assemblies 100 may be connected in both parallel and series structures. But the above-described structures for connecting the plurality of electrode assemblies 100 in series and in parallel are merely examples, and the present invention is not limited to these examples.

In addition, the following embodiments are disclosed:
1. A secondary battery comprising:
   electrode assemblies each including a first electrode, a separator, a second electrode, a first electrode tab connected to the first electrode, and a second electrode tab connected to the second electrode;
   a case, with the electrode assemblies accommodated in a receiving space in the case; and
   a cap assembly coupled to the case,
   wherein the cap assembly comprises:
      a cap plate sealing an opening formed in the case;
      first collector plates connected to the first electrode tabs of the electrode assemblies;
      second collector plates connected to the second electrode tabs of the electrode assemblies;
      bus plates, in particular bus bars, arranged in a first direction in which the electrode assemblies are arranged, one of the bus plates connecting two of the first collector plates and one of the bus plates connecting two of the second collector plates;
      a first external terminal connected to one of the first collector plates; and
      a second external terminal connected to one of the second collector plates.
2. The secondary battery according to embodiment 1, wherein the first electrode tabs and the second electrode tabs are arranged in a second direction intersecting the first direction, and
   wherein each of the first collector plates includes a vertical portion connected to the first electrode tabs and horizontal portions connected to one of the bus plates, and
   wherein each of the second collector plates includes a vertical portion connected to the second electrode tabs and a horizontal portion connected to one of the bus plates.
3. The secondary battery according to embodiment 1 or 2, wherein the cap assembly further comprises:
   lower insulators disposed between the horizontal portion of each of the plurality of first collector plates and the electrode assemblies and between the horizontal portion of each of the second collector plates and the electrode assemblies; and
   side insulators disposed between the first collector plates and the case and between the second collector plates and the case.
4. The secondary battery according to any of embodiments 1 to 3, wherein the bus plates are disposed in the first direction on a horizontal portion of each of the first collector plates or on a horizontal portion of each of the second collector plates.
5. The secondary battery according to any of embodiments 1 to 4, wherein the cap assembly further comprises upper insulators disposed on the electrode assemblies between the bus plates and the cap plate, the upper insulators insulating the bus plate from the cap plate, and
   wherein each of the upper insulators overlaps an electrode assembly of the electrode assemblies in a second direction intersecting the first direction, and each of the upper insulators is disposed on a first collector plate of the first collector plates and a second collector plate of the second collector plates.
6. The secondary battery according to embodiment 5, wherein a communication hole is formed in each of the upper insulators in a surface facing an electrode assembly of the electrode assemblies, and
   wherein vent holes are formed in the cap plate at positions corresponding to the communication holes.
7. The secondary battery according to any of embodiments 1 to 6, wherein a through-hole is formed in each of the first collector plates, the second collector plates, the bus plates, and the cap plate, and
   wherein the cap assembly further comprises:
   rivet terminals inserted into the through-holes, each rivet terminal extending through a first collector plate of the first collector plates, a bus plate of the bus plates, and the cap plate or to a second collector plate of the second collector plates, a bus plate of the bus plates, and the cap plate; and
   gaskets inserted into the through-holes formed in the cap plate and insulating the cap plate from the rivet terminals.
8. The secondary battery according to any of embodiments 1 to 7, wherein the case comprises a partition portion partitioning the receiving space.
9. The secondary battery according to embodiment 8, wherein a height of the partition portion corresponds to a difference between a height of a sidewall of the case and a thickness of the cap plate.
10. The secondary battery according to embodiment 8 or 9, wherein two bus recesses are formed in an upper portion of the partition portion, with the bus plates being arranged in the bus recesses.
11. The secondary battery according to embodiment 10, further comprising:
   gaskets disposed in the bus recesses to insulate the bus plates; and
   a step insulator disposed in at least one of the bus recesses between a bus plate and the cap plate.
12. The secondary battery according to any of embodiments 1 to 11, wherein the electrode assemblies are received in the receiving space such that orientations of the first electrode tab and the second electrode tab alternate in the first direction, and
   wherein a bus plate of the bus plates is connected to the first collector plate and the second collector plate between two adjacent electrode assemblies among the electrode assemblies.
13. The secondary battery according to embodiment 12, wherein the cap assembly further comprises a step plate disposed on a first collector plate of the first collector plates that is connected to the first external terminal and a step plate disposed on a second collector plate of the second collector plates that is connected to the second external terminal.
14. The secondary battery according to embodiment 12 or 13, wherein the case comprises a partition portion partitioning the receiving space, with two bus recesses being formed on an upper portion of the partition portion, and with a blocking member disposed in one of the two bus recesses.
15. The secondary battery according to any of embodiments 1 to 14, wherein the electrode assemblies are positioned in the receiving space in the first direction such that the first electrode tabs and the second electrode tabs are arranged in the same direction, and
   wherein the bus plates are connected to the first collector plates and the second collector plates.

### <Description of Reference Symbols>

1: secondary battery
100: electrode assembly
110: first electrode tab
120: second electrode tab
200: case
210: partition portion
300: cap assembly
310: cap plate
320: first collector plate
330: second collector plate
340: bus bar
351: lower insulator
352: side insulator
353: upper insulator
361: rivet terminal
362: first gasket
371: electrolyte injection hole
380: vent portion
391: first external terminal
392: second external terminal

## Claims

1. A secondary battery (1) comprising:
a plurality of electrode assemblies (100) each including a first electrode, a separator, a second electrode, a first electrode tab (110) connected to the first electrode, and a second electrode tab (120) connected to the second electrode;
a case (200), with the plurality of electrode assemblies (100) accommodated in a receiving space in the case (200); and
a cap assembly (300) coupled to the case (200),
wherein the cap assembly (300) comprises:
a cap plate (310) sealing an opening of the case (200);
a plurality of first collector plates (320) connected to the first electrode tabs (110) of the plurality of electrode assemblies (100);
a plurality of second collector plates (330) connected to the second electrode tabs (120) of the plurality of electrode assemblies (100);
a plurality of bus bars (340) arranged in a first direction in which the plurality of electrode assemblies (100) are arranged, one of the plurality of bus bars (340) connecting at least two of the plurality of first collector plates (320) and the plurality of second collector plates (330);
a first external terminal (391) connected to one of the plurality of first collector plates (320); and
a second external terminal (392) connected to one of the plurality of second collector plates (330).

2. The secondary battery (1) according to claim 1, wherein the first electrode tabs (110) and the second electrode tabs (120) are arranged in a second direction intersecting the first direction, and
wherein each of the plurality of first collector plates (320) includes a vertical portion (321) connected to the first electrode tabs (110) and a horizontal portion (332) connected to one of the plurality of bus bars (340), and
wherein each of the plurality of second collector plates (330) includes a vertical portion (321) connected to the second electrode tabs (120) and a horizontal portion (332) connected to another one of the plurality of bus bars (340).

3. The secondary battery (1) according to claim 1 or 2, wherein the cap assembly (300) further comprises:
lower insulators (351) disposed between the horizontal portion (332) of each of the plurality of first collector plates (320) and the electrode assemblies (100) and between the horizontal portion (332) of each of the plurality of second collector plates (330) and the electrode assemblies (100); and
side insulators (352) disposed between the first collector plates (320) and the case (200) and between the second collector plates (330) and the case (200).

4. The secondary battery (1) according to any of claims 1 to 3, wherein the bus bars (340) are disposed in the first direction on a horizontal portion (332) of each of the plurality of first collector plates (320) or on a horizontal portion (332) of each of the plurality of second collector plates (330).

5. The secondary battery (1) according to any of claims 1 to 4, wherein the cap assembly (300) further comprises a plurality of upper insulators (353) disposed on the plurality of electrode assemblies (100) between the bus bars (340) and the cap plate (310), the upper insulators (353) insulating the bus bar from the cap plate (310), and
wherein each of the plurality of upper insulators (353) overlaps a corresponding electrode assembly of the plurality of electrode assemblies (100) in a third direction intersecting the first direction, and each of the plurality of upper insulators (353) is disposed on a corresponding first collector plate of the plurality of first collector plates and a corresponding second collector first collector plate of the plurality of first collector plates (320) and a second collector plate of the second collector plates (330).

6. The secondary battery (1) according to claim 5, wherein a communication hole (354) is formed in a surface of each of the upper insulators(353) facing a corresponding electrode assembly of the plurality of electrode assemblies (100), and
wherein vent holes (381) are formed in the cap plate (310) at positions corresponding to the communication holes (354).

7. The secondary battery (1) according to any of claims 1 to 6, wherein a through-hole (310h, 320h, 330h) is formed in each of the first collector plates (320), the second collector plates (330), the bus bars, and plates (340), and the cap plate (310), and
wherein the cap assembly (300) further comprises:
a plurality of rivet terminals (361) inserted into the through-holes (310h, 320h, 330h), each rivet terminal (361) extending through a corresponding first collector plate of the plurality of first collector plates (320), a corresponding bus bar of the plurality of bus bars (340), and the cap plate (310) or to a second collector plate of the second collector plates (330), a bus plate of the bus plates (340), and the cap plate or through a corresponding second collector plate of the plurality of second collector plates, a corresponding bus bar of the plurality of bus bars, and the cap plate (310); and
gaskets (362) inserted into the through-holes (310h) formed in the cap plate (310) and insulating the cap plate (310) from the rivet terminals (361).

8. The secondary battery (1) according to any of claims 1 to 7, wherein the case (200) comprises a partition portion (210) partitioning the receiving space.

9. The secondary battery (1) according to claim 8, wherein a height of the partition portion (210) is the same as a difference between a height of a sidewall of the case (200) and a thickness of the cap plate (310).

10. The secondary battery (1) according to claim 8 or 9, wherein two bus recesses (211) are formed in an upper portion of the partition portion (210), with the bus bars (340) being arranged in the bus recesses (211).

11. The secondary battery (1) according to claim 10, further comprising:
gaskets (212) disposed in the bus recesses (211) to insulate the bus bars (340); and
a step insulator disposed (355) in at least one of the two bus recesses (211) between a corresponding bus bar of the plurality of bus bars (340) and the cap plate (310).

12. The secondary battery (1) according to any of claims 1 to 11, wherein the plurality of electrode assemblies (100) are received in the receiving space such that the first electrode tab (110) and the second electrode tab are alternately arranged (120) in the first direction, and
wherein each bus bar of the plurality of bus bars (340) is connected to the first collector plate (320) and the second collector plate (330) between two adjacent electrode assemblies (100) among the plurality of electrode assemblies (100).

13. The secondary battery (1) according to claim 12, wherein the cap assembly (300) further comprises a step plate (341) disposed on the one of the plurality of first collector plates (320) that is connected to the first external terminal (391) and a step plate (341) disposed on the one of the plurality of second collector plates (330) that is connected to the second external terminal (392).

14. The secondary battery (1) according to claim 12 or 13, wherein the case (200) comprises a partition portion (210) partitioning the receiving space, with two bus recesses (211) being formed in an upper portion of the partition portion (210), and with a blocking member (213) disposed in one of the two bus recesses (211).

15. The secondary battery (1) according to any of claims 1 to 14, wherein the plurality of electrode assemblies (100) are positioned in the receiving space in the first direction such that the first electrode tabs (110) of the plurality of electrode assemblies are arranged in the same direction, and the second electrode tabs (120) of the plurality of electrode assemblies are arranged in the same direction, and
wherein one of the plurality of bus bars (340) connects at least two of the plurality of first collector plates (320) and another of the plurality of bus bars connects at least two of the plurality of second collector plates (330).
